# NEUE EUROPÄISCHE PATENTSCHRIFT

(11) **EP 0 196 480 B2**
(45) Veröffentlichungstag und Bekanntmachung des Hinweises auf die Entscheidung über den Einspruch: **23.03.1994**
(45) Hinweis auf die Patenterteilung: 21.09.1988
(21) Anmeldenummer: 86102872.8
(22) Anmeldetag: 05.03.1986
(51) Int. Cl.: H01F 40/06, H02B 1/18

(54) **Hochspannungsschaltanlage**
High-voltage switching equipment
Installation de commutation haute tension

(30) Priorität: 14.03.1985 CH 1136/85
(43) Veröffentlichungstag der Anmeldung: 08.10.1986
(73) Patentinhaber: Sprecher Energie AG, CH-5036 Oberentfelden (CH)
(72) Erfinder: Kessi, Erich, CH-5035 Unterentfelden (CH)
(74) Vertreter: Patentanwälte Schaad, Balass, Menzl & Partner AG

(56) Entgegenhaltungen:
- BE-A- 783 947
- DE-A- 1 488 165
- DE-A- 1 538 061
- DE-A- 1 803 633
- DE-A- 2 315 323
- DE-A- 2 409 595
- DE-A- 2 939 934
- DE-A- 3 012 163
- DE-A- 3 012 164
- DE-A- 3 035 382
- DE-A- 3 035 983
- DE-A- 3 230 091
- DE-A- 3 313 192
- DE-B- 1 229 614
- DE-B- 1 804 114
- FR-A- 1 591 338
- FR-A- 2 133 905

## Beschreibung

Die vorliegende Erfindung betrifft eine Hochspannugsschaltanlage gemäss Oberbegriff des Anspruches 1 sowie einen für den Einbau in einer solchen Schaltanlage geeigneten Hochspannungsmesswandler gemäss Anspruch 11.

Eine bekannte Schaltanlage dieser Art weist einen Vakuumschalter mit horizontal verlaufender Längsachse auf, der am einen Ende über einen das Antriebsgestänge aufnehmenden Stützisolator abgestüzt ist und am anderen Ende machanisch und elektrisch mit einem Kopfstromwandler lösbar verbunden ist (DE-A-1 488 165). Der Stromwandler sitzt auf einem zweiten Stützisolator, der neben der Abstützung des Stromwandlers auch zur Abstützung des Vakuumschalters dient. Die zu den Sekundärwicklungen des Stromwandlers führenden Sekundärleitungen verlaufen in einem im Innern des zweiten Stützisolators angeordneten, geerdeten Rohr, das zudem die Sekundärwicklungen des Stromwandlers trägt. Der Innenraum des Stromwandlers ist mit einem Isoliergas (Schwefellhexafluorid) gefüllt.

Da sich der Vakuumschalter, wie erwahnt, am einen Ende nicht direkt, sondern über den Stromwandler auf dem zweiten Stützisolator abstützt, bildet der Stromwandler sozusagen einen Teil des ganzen Schalters. Dies macht ein Ein- und Ausbauen des Stromwandlers verhältnismässig aufwendig, ist doch hiezu ein vorübergehendes Abstützen des Vakuumschalters nötig.

Der vorliegenden Erfindung liegt nun die Aufgabe zugrunde, eine Hochspannungsschaltanlage der eingangs genannten Art von platzsparender Bauweise zu schaffen, bei der eine einfache Montage und Demontage des Messwandlers möglich ist, ohne dass hiefür umfangreiche Hilfsmittel nötig sind.

Diese Aufgabe wird erfindungsgemäss durch die Merkmale des kennzeichnenden Teils des Anspruches 1 gelöst.

Da der als selbständige Baueinheit ausgebildete Messwandler am Anlageteil, mit dem er im Bereich mindestens des einen der Primäranschlüsse des Stromwandlerteiles verbunden ist, hängend angeordnet ist und dabei fusseitig nicht abgestützt zu werden braucht, ist wegen des Wegfalls einer zusätzlichen gewichtsaufnehmenden Abstützung eine einfache und platzsparends Bauweise möglich. Der Messwandler muss fusseitig nicht von mechanisch hoch beanspruchbarer Konstruktion sein, da ja über die Fusseite keine Gowichtsabstützung mit der damit verbundenen Druckbeanspruchung erfolgt und auf die Fusseite keine von den Zuleitungen herrührende Kräfte einwirken. Zudem lässt sich der Messwandler mit verhältnismässig geringem Aufwand an- und abbauen, ohne dass ein Eingriff in die übrigen Anlageteile notwendig ist.

Bevorzugte Weiterausgestaltungen der erfindungsgemässen Hochspannungsschaltanlage bzw. des Messwandlers bilden Gegenstand der abhängigen Ansprüche 2 - 10.

Im folgenden werden anhand der Zeichnung Ausführungsbeispiele des Erfindungsgegenstandes näher erläutert. Es zeigt rein schematisch:
Fig. 1 eine erste Ausführungsform eines Messwandlers im Längsschnitt,
Fig. 2 in Seitenansicht einen Schalter mit angebautem Messwandler gemäss Fig. 1,
Fig. 3 ebenfalls in Seitenansicht einen andersartigen Schalter mit angebautem Messwandler gemäss Fig. 1, und
Fig. 4 in einer der Fig. 1 entsprechenden Schnittdarstellung eine zweite Ausführungsform eines Messwandlers.

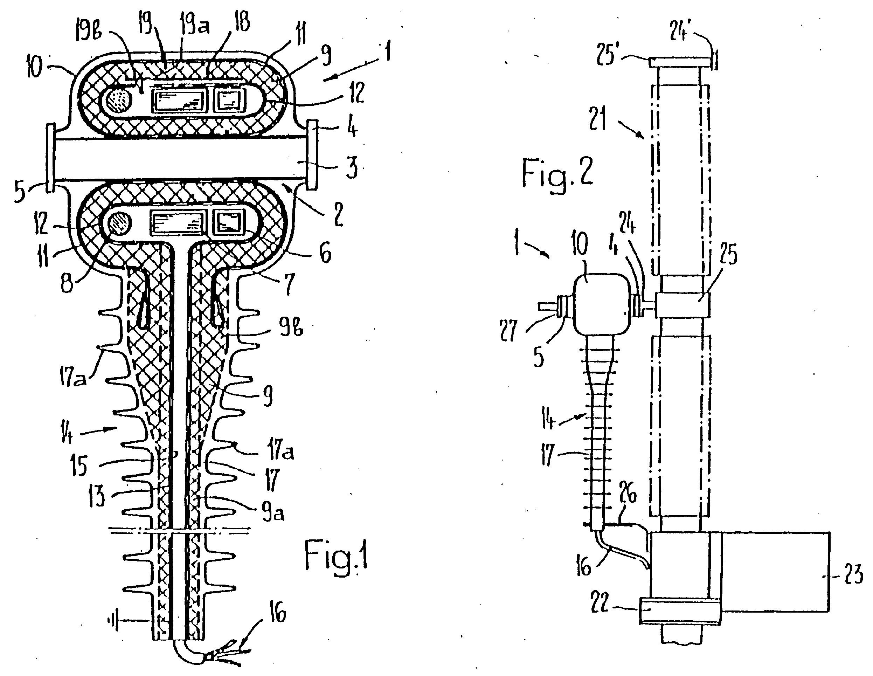

Der in Fig. 1 gezeigte Hochspannungsmesswandler 1 weist einen Stromwandlerteil 2 auf, dessen stabförmiger Primärleiter mit 3 bezeichnet ist. Dieser primäre Stromleiter 3 durchsetzt den Messwandler 1 und ist an seinen beiden Enden mit Anschlussflanschen 4 und 5 aus elektrisch leitendem Material versehen. Der Sekundärteil des Stromwandlerteils 2 ist um den primären Stromleiter 3 herum angeordnet und wird beispielsweise durch zwei ringförmige Eisenkerne mit Sekundärwirkungen 6 und 7 gebildet. Dieser Sekundärteil des Stromwandlerteiles 2 kann auch anstelle der oder zusätzlich zu den Sekundärwicklungen 6, 7 ein Lichtleitelement 8 aufweisen, wie das beispielsweise aus der US-PS-3 306 013 und der FR-OS-2 430 1112 bekannt ist. Daneben ist es auch möglich, im Sekundärbereich des Stromwandlerteiles 2 magnetoelektrische Bauelemente, wie z.B. Hallelemente, anzuordnen, wie das an sich ebenfalls bekannt ist (Siehe beispielsweise CH-PS 588 762).

Der Sekundärteil 6, 7, 8 des Stromwandlerteiles 2 ist von einer Isolation 9 aus Kunststoff, vorzugsweise Giessharz auf Epoxid-, Polyester-, Polyurethan- oder Silikonbasis, umgeben. Primär- und Sekundärseite 3; 6, 7, 8 des Stromwandlerteiles 2 sind von einem Gehäuse 10 umgeben. Besteht dieses Gehäuse 10 aus einem elektrisch leitenden Material, so ist das Gehäuse 10 gegenüber dem Primärleiter 3 zu isolieren.

Auf ihrer dem Primärleiter 3 zugekehrten Aussenseite ist die Isolation 9 mit einem an Nennpotential liegenden Leitbelag 11 versehen. Auf der dem Sekundärteil 6, 7, 8 des Stromwandlerteils 2 zugekehrten Innenseite weist die Isolation 9 einen zweiten Leitbelag 12 auf, der geerdet ist. Dieser zweite Leitbelag 12 ist zu einem Erdungsmantel 13 verlängert, der in einer an das Gehäuse 10 anschliessenden Durchführung 14 verläuft und einen Kanal 15 umgibt, der sich in Längsrichtung der Durchführung 14 erstreckt. In diesem Kanal 15 verlaufen die zu den Sekundärwicklungen 6, 7 bzw. zum Lichtleitelement 8 führenden Sekundärleitungen 18. Um den Kanal 15 und den Erdungsmantel 13 herum verläuft ein Schutzmantel 17 aus Kunststoff, der mit Schirmen 17a versehen ist. Der Raum zwischen dem Schutzmantel 17 und dem Erdungsmantel 13 ist ebenfalls mit einer Isolation 9 ausgefüllt, die aus dem gleichem Material besteht wie die die sekundären Bauteile 6, 7, 8 des Stromwandlerteiles 2 umgebende Isolation 9. d.h. vorzugsweise aus Giessharz.

Zwischen dem äusseren und inneren Leitbelag 11, 12 ist in der Isolation 9 ein dritter Leitbelag 18 angeordnet, der zusammen mit den beiden andern Leitbelägen 11, 12 einen kapazitiven Spannungsteiler 19 bildet. Die Abgriffspunkte für die Meßspannung sind mit 19a und 19b bezeichnet. Somit erlaubt der Messwandler 1 neben einer Strommessung auch eine Spannungsmessung.

Bei der Herstellung dieses Messwandlers 1 wird die Isolation 9 vorzugsweise in drei aufeinanderfolgenden Schritten gebildet. In einem ersten Schritt wird der den Kanal 15 umgebende, in Fig. 1 durch gestrichelte Linien begrenzte Isolationsteil 9a gebildet. Anschliessend wird der restliche, mit 9b bezeichnete Teil der Isolation 9 gebildet. In einem dritten Schritt wird dann der Schutzmantel 17 mit den Schirmen 17a geformt. Selbstverständlich ist es auch möglich, die Isolation 9 und den Schutzmantel 17 in einem einzigen Arbeitsgang zu bilden.

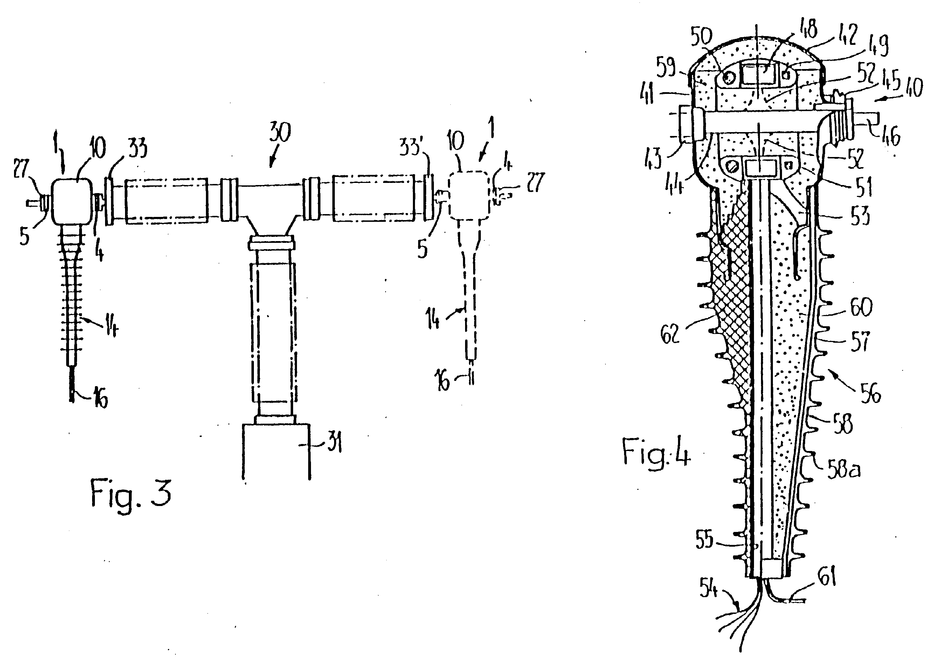

Anhand der Fig. 2 und 3 werden nun Möglichkeiten für den Einbau des Messwandlers 1 gemäss Fig. 1 in Hochspannungsschaltanlagen erläutert.

In Fig. 2 ist von einer Freiluft-oder Innenraumschaltanlage ein Leistungsschalter 21 an sich bekannter Bauart gezeigt, der auf einer Tragkonstruktion 22 ruht, an der auch der Schalterantrieb 23 befestigt ist. Der Messwandler 1 ist mit dem einen Anschlussflansch 4 an einem Befestigungsflansch 24 angebracht, der mit dem unteren Schalteranschluss 25 verbunden ist. Über diese Flanschverbindung 4, 24 ist der Messwandler 1 sowohl elektrisch wie auch mechanisch mit dem Schalter 21 verbunden. Am fusseitigen Ende ist die Durchführung 14 mit einer am Schalter 21 bzw. der Tragkonstruktion 22 befestigten Halterung 26 verbunden, welche nur zur seitlichen Führung der Durchführung 14 dient, jedoch keine gewichtsabstützende Wirkung entfaltet. Mit dem anderen Anschlussflansch 5 des Messwandlers 1 ist ein Anschlussteil 27 für einen Stromleiter, z.B. eine Stromschiene oder ein Leiterteil, verbunden.

Der Messwandler 1 hängt nun am Flansch 24 des Schalters 21 und ist im übrigen nach unten nicht abgestützt. Das Gewicht des Messwandlers 1 wird somit vom Schalter 21 getragen. Eine eigene Tragkonstruktion für den Messwandler 1 ist somit nicht erforderlich. Da der Messwandler 1 nicht über die Durchführung 14 abgestützt werden muss, kann diese Durchführung 14 von leichter Bauweise sein, d.h., die Durchführung 14 muss nicht für die Aufnahme von Druckkräften ausgelegt werden, welche dann auftreten würden, wenn der Messwandler 1 unten abgestützt wäre.

Das Montieren und Demontieren des Messwandlers 1 kann auf verhältnismässig einfache Weise erfolgen, ohne dass dabei in den Schalter 21 selbst eingegriffen werden muss.

Bei der in Fig. 3 gezeigten Ausführungsform weist die Schaltanlage einen Leistungsschalter 30 in T-Bauweise auf, der auf einer Tragkonstruktion 31 ruht. Der Messwandler 1 ist, ähnlich wie bei der in Fig. 2 gezeigten Ausführungsform beschrieben, mittels des Anschlussflansches 4 oder des Anschlussflansches 5 an einem Schalteranschluss 33 bzw. 33' angeflanscht. Der andere Anschlussflansch 5 bzw. 4 ist mit einem Anschlussteil 27 für einen Stromleiter verbunden. Auch in diesem Fall hängt der Messwandler 1 am Schalter 30 und ist im übrigen nicht abgestützt. Bezüglich Befestigung und Abstützung des Messwandlers 1 entsprechen sich somit die Ausführungsformen gemäss den Fig. 2 und 3.

In Fig. 4 ist ein anderes Ausführungsbeispiel eines Messwandlers gezeigt, bei dem statt eines festen Isolierwerkstoffes ein Isoliergas verwendet wird.

Der in dieser Fig. 4 gezeigte Stromwandler 40 weist ein Kopfgehäuse 41 von selbsttragender Konstruktion auf, das oben durch einen Deckel 42 abgeschlossen ist. Letzterer ist mit dem Kopfgehäuse 41 gasdicht verbunden. Das Gehäuse 41 weist an einer Seite einen Anschluss 43 zum mechanischen und elektrischen Anschliessen des Stromwandlers 40 an einen Schaltanlagenteil auf. Mit diesem Anschluss 43 ist ein dunnwandiges Rohr 44 verbunden, das durch das Gehäuse 41 hindurch verläuft und einen Isolator 45 durchsetzt, der im Gehäuse 41 gehalten ist. Dieser Isolator 45 kann dann entfallen, wenn das Gehäuse 41 aus einem elektrisch nicht leitenden Material besteht. Das Rohr 44 ist mit einem Anschluss 46 für einen Stromleiter (Stromschiene oder Leiterseil) verbunden. Das Rohr 44 wird als Primärleiter verwendet. In einem solchen Fall ist natürlich die Wandstärke des Rohres 44 der Grösse des zu führenden Stromes entsprechend zu wählen.

Der Primärleiter 47 ist gleich wie beim Ausführungsbeispiel gemäss Fig. 1 von den Bauteilen der Sekundärseite des Stromwandlers 40 umgeben. Diese sekundärseitigen Bauteile sind gleich wie in Fig. 1 als Eisenkerne mit Sekundärwicklungen 48 und 49 und als Lichtleiterelement 50 dargestellt. Daneben ist es auch bei dieser Ausführungsform möglich, auf der Sekundärseite magnetoelektrische Bauelemente, z. B. Hall-Elemente, vorzusshen. Die sekundärseitigen Bauelemente 48, 49, 50 sind im Innern einer Abschirmung 51 untergebracht, die mittels Abstütz-bzw. Zentrierelementen 52 und 53 am Rohr 44 bzw. am Gehäuse 41 abgestützt und in ihrer Lage gehalten ist.

Die mit den sekundärseitigen Bauelementen 48, 49, 50 verbundenen Sekundärleiter 54 verlaufen in einem Kanal 55, der sich in Längsrichtung einer Durchführung 56 erstreckt, welche mit dem Gehäuse 41 verbunden ist. Diese Durchführung 58 weist einen in einem Abstand vom Kanal 55 verlaufenden Isoliermantel 57 auf, der auf seiner Aussenseite einen Schutzmantel 58 mit Schirmen 58a aufweist, wie das in der rechten Hälfte der Fig. 4 dargestellt ist. Der Isoliermantel 57 und der Schutzmantel 58 bestehen aus einem Kunststoffmaterial. Sowohl der Innenraum 59 des Gehäuses 41 wie auch der Raum 60 zwischen Kanal 55 und Isoliermantel 57 ist mit einem Isoliergas, vorzugsweise Schwefelhexafluorid, gefüllt. Im Innern des Kanals 55 verläuft eine Verbindungsleitung 61, die zum Füllen der Räume 59 und 60 mit Isoliergas sowie zu dessen Überwachung dient.

In der linken Hälfte der Fig. 4 ist eine andere Ausführungsform der Durchführung 56 gezeigt. Bei dieser ist der Kanal 55 von einem mit Schirmen versehenen Isolierkörper 62 aus einem Kunststoff, vorzugsweise Giessharz, umgeben. Bei dieser Variante ist die Durchführung 56 demzufolge ähnlich ausgebildet wie bei der Ausführungsform gemäss Fig. 1.

Der in Fig. 4 gezeigte Stromwandler 40 wird gleich wie der Messwandler 1 gemäss Fig. 1 mittels seines Anschlussflansches 43 an einen Leistungsschalter angeflanscht und auf diese Weise mit dem Schalter mechanisch und elektrisch verbunden. Der Stromwandler 40 ist somit ebenfalls hängend am Schalter befestigt und muss unten nicht abgestützt werden, wie das anhand der Fig. 2 und 3 bereits erläutert wurde.

Obwohl der Messwandler 1 bzw. der Stromwandler 40 vorzugsweise auf die beschriebene Weise direkt an einen Leistungsschalter angeflanscht werden, ist es auch denkbar, die Wandler 1, 40 mit den Anschlussflanschen 4, 5, 43 an einem andern Bauteil einer Hochspannungsschaltanlage hängend zu befestigen.

## Patentansprüche

1. Hochspannungsschaltanlage mit einem einen Stromwandlerteil (2) in Kopfbauweise aufweisenden Hochspannungsmesswandler (1), der im Bereich wenigstens des einen Primäranschlusses (4,5) des Stromwandlerteils (2;40) elektrisch und mechanisch lösbar mit einem weiteren Anlageteil (21,30) verbunden ist und bei dem der Primärstromleiter (3;47) des Stromwandlerteils (2;40) sich in das Innere des Messwandlers (1) erstreckt, dadurch gekennzeichnet, dass der Messwandler (1) als selbständige Baueinheit ausgebildet ist, dass der Primärstromleiter (3;47) an einem Ende mit einem, vorzugsweise flanschartigen Befestigungselement (4,5;43) versehen ist, mittels welchem der Messwandler (1) mit dem weiteren Anlageteil (21,30), an letzterem hängend, ohne fusseitige gewichtsaufnehmende Abstützung, mechanisch verbunden ist, und dass die gewichtsaufnehmende Abstützung des Messwandlers (1) ausschliesslich über das Befestigungselement (4,5) erfolgt.

2. Schaltanlage nach Anspruch 1, dadurch gekennzeichnet, dass das Befestigungselement (4,5;43) elektrisch leitend ist.

3. Schaltanlage nach Anspruch 1 oder 2, dadurch gekennzeichnet, dass der Primärstromleiter (3;47) den Messwandler (1;40) durchsetzt und von den sekundärseitigen Bauelementen (6,7,8;48,49,50) des Stromwandlerteils (2,40) umgeben ist.

4. Schaltanlage nach einem der Ansprüche 1 - 3, dadurch gekennzeichnet, dass der Messwandler (1; 40) seitlich an einen Schalter (21, 30) angeschlossen ist.

5. Schaltanlage nach einem der Ansprüche 1 - 4, dadurch gekennzeichnet, dass der Primär- und Sekundärteil (3,6,7,8; 47,48,49,50) des Stromwandlerteils (2; 40) von einem Gehäuse (10; 41, 42) umschlossen ist, von dem eine Wegführung (14; 56) für die Sekundärleiter (16; 54) des Stromwandlerteils (2; 40) vorzugsweise nach unten wegragt.

6. Schaltanlage nach einem der Ansprüche 1 - 5, dadurch gekennzeichnet, dass Primär- und Sekundärseite (3; 6,7,8) des Stromwandlerteils (2) durch ein festes Isoliermaterial, vorzugsweise Kunststoff, voneinander isoliert sind.

7. Schaltanlage nach einem der Ansprüche 1 - 6, dadurch gekennzeichnet, dass Primär- und Sekundärteil (47; 48,49,50) des Stromwandlerteils (40) durch ein gasförmiges Isoliermaterial, vorzugsweise Schwefelhexafluorid, voneinander isoliert sind.

8. Schaltanlage nach Anspruch 5, dadurch gekennzeichnet, dass die Sekundärleiter (16; 54) in einem zentralen Kanal (15; 55) verlaufen, der von einem festen oder gasförmigen Isolationsmaterial, vorzugsweise Kunststoff oder Schwefelhexafluorid, umgeben ist.

9. Schaltanlage nach den Ansprüchen 6 und 8, dadurch gekennzeichnet, dass als Isolationsmaterial ein Kunststoff, vorzugsweise Giessharz, verwendet wird.

10. Schaltanlage nach Anspruch 6, dadurch gekennzeichnet, dass die Isolation (9) zwischen Primär- und Sekundärseite (3;6,7,8) gegen die Primärseite (3) hin mit einem ersten Leitbelag (11) und gegen die Sekundärseite (6,7,8) hin mit einem zweiten Leitbelag (12) versehen ist und dass zwischen diesen beiden Leitbelägen (11, 12) ein dritter Leitbelag (18) angeordnet ist, der mit den beiden anderen Leitbelägen (11, 12) einen kapazitiven Spannungsteiler (9) bildet.

11. Hochspannungsmesswandler zum hängenden Befestigen in einer Hochspannungsschaltanlage gemäss einem der Ansprüche 1 bis 10, mit einem Stromwandlerteil (2,40) in Kopfbauweise, dessen Primärstromleiter (3;47) sich in das Innere des Messwandlers (1) erstreckt, wobei der Messwandler (1) im Bereich wenigstens des einen Primäranschlusses (4,5) des Stromwandlerteils (2;40) zum elektrisch und mechanisch lösbaren Verbinden mit einem Teil (21,30) der Hochspannungsschaltanlage bestimmt ist, dadurch gekennzeichnet, dass der Messwandler (1) als selbständige Baueinheit ausgebildet ist, dass der Primärstromleiter (3;47) an einem Ende mit einem, vorzugsweise flanschartigen Befestigungselement (4,5;43) versehen ist, mittels welchem der Messwandler (1) mit dem weiteren Anlageteil (21,30), an letzterem hängend, ohne fusseitige gewichtsaufnehmende Abstützung, mechanisch verbindbar ist, wobei die gewichtsaufnehmende Abstützung des Messwandlers (1) ausschliesslich über das Befestigungselement (4,5) erfolgt.

## Claims

1. A high-voltage switching system comprising a high-voltage instrument transformer (1) which has a current transformer part (2) of head-type construction and which is detachably connected, electrically and mechanically, to a further system part (21, 30) in the region of at least one primary connection (4, 5) of the current transformer part (2; 40) and wherein the primary current conductor (3; 47) of the current transformer part (2; 40) extends into the interior of the instrument transformer (1), characterised in that the instrument transformer (1) is formed as an independent unit, in that the primary current conductor (3; 47) is provided at one end with a preferably flange-type mounting element (4, 5; 43), by means of which the instrument transformer (1) is mechanically connected to the other system part (21, 30) so as to be suspended thereon without weight-bearing support at the lower end, and in that the weight-bearing support for the instrument transformer (1) is provided exclusively via the mounting element (4, 5).

2. A switching system according to claim 1, characterised in that the mounting element (4, 5; 43) is electrically conductive.

3. A switching system according to claim 1 or 2, characterised in that the primary current conductor (3; 47) passes through the instrument transformer (1; 40) and is surrounded by the secondary-side components (6, 7, 8; 48, 49, 50) of the current transformer part (2, 40).

4. A switching system according to any one of claims 1 - 3, characterised in that the instrument transformer (1; 40) is laterally connected to a switch (21, 30).

5. A switching system according to any one of claims 1 - 4, characterised in that the primary and secondary parts (3, 6, 7, 8; 47, 48, 49, 50) of the current transformer part (2; 40) are enclosed by a housing (10; 41, 42), from which a lead (14; 56) for the secondary conductors (16; 54) of the current transformer part (2; 40) extends, preferably downwards.

6. A switching system according to any one of claims 1 - 5, characterised in that the primary and secondary sides (3; 6, 7, 8) of the current transformer part (2) are insulated from each other by a solid insulating material, preferably synthetic material.

7. A switching system according to any one of claims 1 - 6, characterised in that the primary and secondary parts (47; 48, 49, 50) of the current transformer part (40) are insulated from each other by a gaseous insulating material, preferably sulphur hexafluoride.

8. A switching system according to claim 5, characterised in that the secondary conductors (16; 54) extend in a central channel (15; 55) which is surrounded by a solid or gaseous insulating material, preferably synthetic material or sulphur hexafluoride.

9. A switching system according to claims 6 and 8, characterised in that a synthetic material, preferably casting resin, is used as insulating material.

10. A switching system according to claim 6, characterised in that the insulation (9) between the primary and secondary sides (3; 6, 7, 8) is provided with a first conductive coating (11) towards the primary side (3) and with a second conductive coating (12) towards the secondary side (6, 7, 8), and in that a third conductive coating (18) is arranged between these two conductive coatings (11, 12) and forms a capacitive voltage divider (9) with the other two conductive coatings (11, 12).

11. A high-voltage instrument transformer for suspension in a high-voltage switching system according to any one of claims 1 to 10, comprising a current transformer part (2, 40) of head-type construction, the primary current conductor (3; 47) of which extends into the interior of the instrument transformer (1), wherein the instrument transformer (1) is intended to be detachably connected, electrically and mechanically, to a part (21, 30) of the high-voltage switching system in the region of at least one primary connection (4, 5) of the current transformer part (2; 40), characterised in that the instrument transformer (1) is formed as an independent unit, and in that the primary current conductor (3; 47) is provided at one end with a preferably flange-type mounting element (4, 5; 43), by means of which the instrument transformer (1) is mechanically connected to the other system part (21, 30) so as to be suspended thereon without weight-bearing support at the lower end, the weight-bearing support for the instrument transformer (1) being provided exclusively via the mounting element (4, 5).

## Revendications

1. Installation de commutation haute tension avec un transformateur de mesure haute tension (1) comprenant une section de transformateur d'intensité (2) en construction de tête, qui, dans la région d'au moins l'un des branchements primaires (4, 5) de la section de transformateur d'intensité (2), est relié électriquement et mécaniquement de manière amovible à un autre élément (21, 30) de l'installation et dans laquelle le conducteur de courant primaire (3 ; 47) de la section de transformateur d'intensité (2 ; 40) s'étend à l'intérieur du transformateur de mesure (1), caractérisée en ce que le transformateur de mesure (1 ; 40) est réalisé sous la forme d'une unité autonome, que le conducteur de courant primaire (3 ; 47) est muni à une extrémité d'un élément de fixation (4, 5 ; 43) de préférence en forme de bride, au moyen duquel le transformateur de mesure (1) est relié mécaniquement à l'autre élément (21, 30) de l'installation de façon à être suspendu sur ce dernier, sans être soutenu du côté pied de façon à absorber son poids, et que le soutien avec absorption du poids du transformateur de mesure (1) est assuré exclusivement par l'intermédiaire de l'élément de fixation (4, 5).

2. Installation de commutation selon la revendication 1, caractérisée en ce que l'élément de fixation (4, 5 ; 43) est électriquement conducteur.

3. Installation de commutation selon l'une des revendications 1 et 2, caractérisée en ce que le conducteur de courant primaire (3 ; 47) traverse le transformateur de mesure (1 ; 40) et est entouré par les éléments du côté secondaire (6, 7, 8 ; 48, 49, 50) de la section de transformateur d'intensité (2 ; 40).

4. Installation de commutation selon l'une quelconque des revendications 1 à 3, caractérisée en ce que le transformateur de mesure (1 ; 40) est raccordé latéralement à un interrupteur (21, 30).

5. Installation de commutation selon l'une quelconque des revendications 1 à 4, caractérisée en ce que les parties primaire et secondaire (3, 6, 7, 8 ; 47, 48, 49, 50) de la section de transformateur d'intensité (2 ; 40) sont entourées d'un boîtier (10 ; 41, 42) duquel s'écarte, de préférence vers le bas, une sortie (14 ; 56) pour les conducteurs secondaires (16 ; 54) de la section de transformateur d'intensité (2 ; 40).

6. Installation de commutation selon l'une quelconque des revendications 1 à 5, caractérisée en ce que les côtés primaire et secondaire (3 ; 6, 7, 8) de la section de transformateur d'intensité (2) sont isolés l'un par rapport à l'autre par une matière isolante solide, de préférence une matière plastique.

7. Installation de commutation selon l'une quelconque des revendications 1 à 6, caractérisée en ce que les parties primaire et secondaire (47 ; 48, 49, 50) de la section de transformateur d'intensité (40) sont isolées l'une par rapport à l'autre par une matière isolante gazeuse, de préférence l'hexafluorure de soufre.

8. Installation de commutation selon la revendication 5, caractérisée en ce que les conducteurs secondaires (16 ; 54) sont disposés dans un canal central (15 ; 55) lequel est entouré d'une matière isolante solide ou gazeuse, de préférence de matière plastique ou d'hexafluorure de soufre.

9. Installation de commutation selon les revendications 6 et 8, caractérisée en ce qu'une matière plastique, de préférence une résine coulée, est utilisée comme matière isolante.

10. Installation de commutation selon la revendication 6, caractérisée en ce que l'isolation (9) entre les côtés primaire et secondaire (3 ; 6, 7, 8) est munie en direction du côté primaire (3) d'un premier revêtement conducteur (11) et, en direction du côté secondaire (6, 7, 8), d'un deuxième revêtement conducteur (12), et qu'entre ces deux revêtements conducteurs (11, 12) est disposé un troisième revêtement conducteur (18) qui forme avec les deux autres revêtements conducteurs (11, 12) un diviseur de tension capacitif (9).

11. Transformateur de mesure haute tension pour une fixation suspendue dans une installation de commutation haute tension selon l'une quelconque des revendications 1 à 10, avec une section de transformateur d'intensité (2, 40) en construction de tête dont le conducteur de courant primaire (3 ; 47) s'étend à l'intérieur du transformateur de mesure (1), le transformateur de mesure (1) étant destiné à un raccordement électrique et mécanique séparable à un élément (21, 30) de l'installation de commutation haute tension, dans la région de l'un au moins des branchements primaires (4, 5) de la section de transformateur d'intensité (2 ; 40), caractérisé en ce que le transformateur de mesure (1 ; 40) est réalisé sous la forme d'une unité autonome, que le conducteur de courant primaire (3 ; 47) est muni à une extrémité d'un élément de fixation (4, 5 ; 43) de préférence en forme de bride, au moyen duquel le transformateur de mesure (1) est relié mécaniquement à l'autre élément (21, 30) de l'installation de façon à être suspendu sur ce dernier, sans être soutenu du côté pied de façon à absorber son poids, et que le soutien avec absorption du poids du transformateur de mesure (1) est assuré exclusivement par l'intermédiaire de l'élément de fixation (4, 5).
